# EUROPEAN PATENT APPLICATION

(11) **EP 1 130 494 A2**
(43) Date of publication of application: **05.09.2001**
(21) Application number: 00403668.7
(22) Date of filing: 22.12.2000
(51) Int. Cl.: G06F 1/00

(54) **Distributed cryptography technique for protecting removable data storage media**

(30) Priority: 14.01.2000 US 176087 P; 05.05.2000 US 565790
(71) Applicant: IOMEGA CORPORATION, Roy, UT 84067 (US)
(72) Inventor: Thomas, Fred C., III, Ogden, Utah 84403 (US); Watson, Brent, Bountiful, Utah 84010 (US); Fowler, Steven M., Bountiful, Utah 84010 (US); Bero, James M., Ogden, Utah 84403 (US); Taylor, Wilhelm, Layton, Utah 84040 (US)
(74) Representative: Cabinet Hirsch

(57) **Abstract**

An apparatus, system and technique for cryptographically securing data in a secure computing environment are provided. Different components of a computer system have associated cryptographic data that is either common to the enterprise or unique to the system component for a given file transfer. In a preferred embodiment, one or more of a user, a processor/host, a remote storage device, and a remote storage medium each have associated cryptographic information that cryptographically secures data files. Once a file is cryptographically transferred to a medium using a cryptographically secure enterprise computer, the medium can be read only from a similarly configured cryptographically secure enterprise computer. Furthermore, storage media are uniquely identified so that copies of the medium can not be read even with a similarly configured cryptographically secure enterprise computer. A distributed encryption method is provided for use in connection with file encryption. Each file that is transferred to a storage medium has a unique key file associated therewith that is also transferred, and in order for the file to be read from the medium, a system with a predefined number of components having the enterprise-common cryptographic data must be present.

## Description

### Background of the Invention

The present application claims priority under 35 U.S.C. § 119(e) to Provisional Application Serial No. 60/176,087, filed January 14, 2000, said application incorporated by reference herein in its entirety.

### Field of the Invention:

The present invention relates to an apparatus, system and technique for cryptographically securing data in a computing environment. More particularly, the present invention relates to cryptographically securing data by implementing a distributed cryptography security technique to a computing environment having a plurality of components.

### Brief Description of Prior Developments:

Maintaining confidentiality and security for some kinds of information has long been a goal for organizations, companies, governments and individuals. For example, organizations desiring to protect affiliation information, companies wishing to keep software or other technology/trade secrets confidential, governments wanting to protect national security information and individuals keeping personal files are all exemplary situations demonstrating the need for robust protection of data.

However, there are a range of problems that can be encountered when attempting to keep data secure within a particular organization, enterprise or computing environment. For example, traditionally one could address securing data by keeping it under lock and key, but this might seriously impinge upon the freedom to transport data within an enterprise. A corollary to this problem is that it would be advantageous to be able to remove certain kinds of highly classified data, on removable storage media, and place the data in a central safe, e.g., at the beginning and end of a day, without risking an information breach from the time of removing the storage medium to the time of physical transfer to the safe.

Other types of data securing solutions may effectively deal with outsiders gaining access to confidential information, but do not guard against what can be referred to as the dedicated insider threat. For example, it is well known by one of ordinary skill in the art to use encryption software, which enables a user to encrypt files so that only someone with access to certain key files can decode the files. This effectively guards against outside intervention if the key(s) are not made known to others. However, this does not guard against piracy of the data by the user or by anyone with access to the key(s). Consequently, the difficulty with many security systems is that they do not guard against this insider threat, i.e., the threat from those people who are privy to the ins and outs of the security system.

In other data security systems, there is no way to differentiate among multiple users of data. For example, the environment may be secure, but there may be no mechanism for identifying who is accessing the data. Even if there is a mechanism for specifying an identity for oneself as a user, there may be no mechanism for validating that the user does in fact conform to the specified identity. In other words, some systems lack user authentication.

Another problem with some data security systems is that the constraints of the system itself introduce substantial hardship (or at least inconvenience) relative to the way things occurred in the absence of the system. For example, a security system may be designed such that multiple people are required to access secure data. If three different people are given a separate code, each of which is required for access to confidential data, then a difficulty can arise in assembling all of the necessary parties for access, and unnecessary delays are thereby introduced. Thus, any time a system introduces additional roadblocks to a process, a burden can result in terms of time, productivity, etc. Ideally, therefore, access to secure data is a seamless, transparent or autonomous process.

Furthermore, many data security systems that rely on encryption algorithms choose one algorithm to perform the cryptography. Once implemented, the security system becomes a potential liability, since the particular algorithm could be 'cracked' by a supercomputer, a clever computer scientist, hacker or the like. Thus, some systems lack interchangeability of encryption techniques, and thus are limited by the strength of the encryption scheme itself.

In short, in spite of the proliferation of network storage solutions, enterprises still value and require portable storage solutions for confidential and proprietary information. One could imagine solutions that allow a user to access information from a single computer, from which data can not be removed; however, for collaborative efforts and for a myriad of practical reasons, portability is still valuable. Storing this information away from the computer of origin, however, proves to be a weak link in keeping data secure, since copies can be made, and disks can be extracted from the environment with relative ease. Therefore, since enterprises continue to develop proprietary information, and portable storage continues to be of value, it would be beneficial to implement a secure portable storage solution for an enterprise.

The problems that are present in today's data security systems have been addressed on an individual basis in some instances, but not effectively. For example, a lock and key solution addresses transportability issues, but presents authentication and logistical issues, and still leaves a weak security link when the data is transferred from the computer to a safe. Also, as mentioned, encryption may protect against outside security breaches, but just as a safe does not protect against theft by a person with the key, encryption alone does not guard against the transport of data by those possessing the key file(s).

User authentication can also be addressed from a variety of angles, in order to identify those accessing data, and to prevent unauthorized people from accessing the data; however, these solutions may present practical difficulties, may increase data access time, may decrease employee morale and/or discourage productivity. For example, if a security personnel must identify everyone with access to data, there can be an implicit mistrust associated with the process, costs are increased and access to data is generally not a seamless or autonomous process.

Furthermore, many security systems rely on a single encryption algorithm, and consequently are only as good as the encryption algorithm itself. However, changing the algorithm in these systems can be a tedious task, and may not even be possible. Additionally, resting security on one encryption scheme is akin to placing all of one's eggs in one basket, without interchangeability or diversity of plan.

Thus, it would be advantageous to create a security system that addresses the above described shortcomings of various existing security systems. It would be beneficial to maintain data transportability within an enterprise. It would be further beneficial to maintain data removability of highly classified data from enterprise computers such that it may be physically secured in a safe, or other secure location. It would be further beneficial to minimize the threat posed by the insider by providing a robustly secure environment for confidential data. It would be further advantageous to provide for user authentication so that a user accessing or changing data can be known, and so that only select users can be given access. It would be even further beneficial to provide component to component authentication that is cryptographically secure within a computer system. It would be still further advantageous to provide for seamless user access to the security system and to maintain compatibility with a variety of data encryption solutions.

### Summary of the Invention

The present invention relates to an apparatus, system and technique for cryptographically securing data in a secure computing environment. Different components of a computer system, including remote storage components and a user, have associated cryptographic data that is either common to the enterprise or unique to the system component for a given file transfer. In a preferred embodiment, one or more of a user/client, a principal processor/host having client applications stored therein, a data storage device, and a remote storage medium each have associated cryptographic information that cryptographically secures data files. Once a file is cryptographically transferred to a medium using a cryptographically secure enterprise computer, according to a preferred embodiment, the medium can be read only from a similarly configured cryptographically secure enterprise computer. Furthermore, storage media are uniquely identified so that copies of the medium can not be read even with a similarly configured cryptographically secure enterprise computer. A distributed encryption scheme is thus provided in which different components of a computer system can have enterprise-common and component-unique cryptographic data associated therewith, for use in connection with file encryption. Each encrypted file that is transferred to a storage medium has a unique key file associated therewith that is also transferred. The client may then use a system with a predefined number of components having the enterprise-common cryptographic data to access the encrypted file.

### Brief Description of the Drawings:

The apparatus, system and apparatus for cryptographically secured removable data storage are further described with reference to the accompanying drawings in which:
Fig. 1 represents a prototypical data storage device for use in connection with the present invention.
Fig. 2 is a block diagram of a data storage device including an exemplary embodiment of a user authentication device and component to component authentication capability in accordance with the present invention.
Fig. 3 is a perspective view of a data storage device including an exemplary embodiment of a user authentication device in accordance with the present invention.
Fig. 4 is a block diagram representing an exemplary technique for cryptographically securing data on a removable data storage medium in accordance with the present invention.
Fig. 5 is a flow diagram illustrating an exemplary method of generating an encryption key and the encryption of a data file in accordance with the present invention.
Fig. 6 is a flow diagram illustrating exemplary host-based encryption of a unique encrypted key file in accordance with the present invention.
Fig. 7 is a flow diagram illustrating an exemplary process of transferring an encrypted file to a storage medium in accordance with the present invention.
Fig. 8 is a flow diagram illustrating an exemplary process of reading an encrypted file from a storage medium in accordance with the present invention.
Fig. 9 is a block diagram of exemplary authentication, read and write sequences for an implementation of a secure memory integrated circuit in accordance with the present invention.

### Detailed Description of Preferred Embodiments:

### Overview

The present invention is described herein with reference to a data storage system in which decentralized or distributed cryptographic techniques are employed to provide robust security for portable storage media. The present invention addresses the shortcomings of today's security systems in numerous ways. A distributed encryption technique is provided with enterprise common codes and system component unique codes, wherein cryptographic information is distributed to or associated with components of the overall data storage system. The enterprise common codes can also be altered in the event of a security breach. Also, user authentication is provided and can be implemented as a further sub-component of the encryption scheme. Furthermore, data is portable when embodied in a removable storage medium, but can be read only under circumstances similar to the original data transfer i.e., same remote storage device encryption configuration, same host device encryption configuration, same level of user authorization, same remote storage medium, etc. Thus, data on the remote storage medium can be read only on enterprise computers that have been configured for such reading. Further, a secure memory is implemented in connection with the data storage device, further safeguarding the security system. Encryption of a file key in the data storage device, by using a key stored in the secure memory, further safeguards and protects the integrity of the security system.

The present invention may be adapted to different encryption techniques and schemes such as PGP, and other such encryption algorithms known by those skilled in the art of cryptography. (Further cryptography techniques adaptable to the present invention can be found in such resources as the Handbook of Applied Cryptography, by Menezes, Van Oorschot and Vanstone or Network Security - Private Communication in a Public World, by Kaufman, Perlman and Speciner.) The present invention also is adaptable to and may employ encryption algorithms, as altered by advancing technology.

As a result, the storage of confidential information away from the computer of origin is no longer a weak link in keeping data secure. In accordance with the present invention, data can not be decrypted from copies of the medium having the encrypted file. Also, the original remote storage medium, even if extracted from the enterprise environment, can not be read without an enterprise computer configured with the enterprise common information.

### Data Storage Device

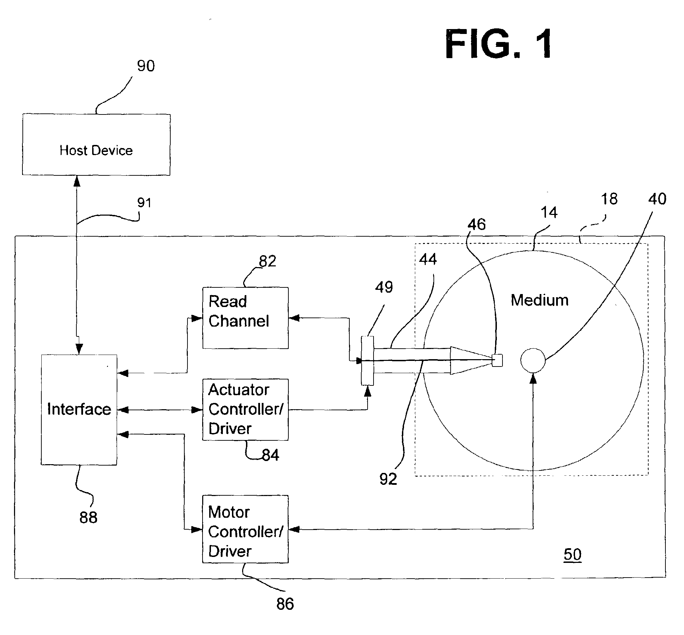

Figure 1 is a schematic diagram of a storage drive for storing and retrieving information for a host device in connection with which the present invention may be employed. Host device 90 may be one of a number of various types of computer based devices such as a personal computer, a handheld computer, musical recording equipment, data processor or the like. Host device 90 communicates with the data storage device 50 via bus 91 by sending commands to write or read digital information to or from digital recording medium 14. Bus 91 may be any one of the various buses such as parallel, generic serial, USB, fire wire, SCSI, and so on. Bus 91 may also be a RF/Bluetooth or other wireless communication means known to those of ordinary skill in the art.

Digital recording medium 14 may be one of any of the various digital data storage media such as magnetic, optical, or magneto-optical. Optionally, medium 14 may be fixed in the data storage device 50, or alternatively removable from data storage device 50. Where the medium 14 is removable from data storage device 50, medium 14 may be encased in an outer shell 18 to protect medium 14 from damage. Digital recording medium 14 may also be one of a type of media wherein one or more of the heads, actuator and motor are included in the media itself. Additionally, medium 14 may be one of various types of solid state memory cards, such as but not limited to those presently implemented in connection with a camera system.

Data storage device 50 comprises a controller 88 that provides an interface with host device 90 and controls the overall operation of data storage device 50. Interface/Controller 88 is preferably a microprocessor-based controller. Data storage device 50 also comprises a read channel 82 for conditioning signals read from medium 14; actuator controller 84 for providing servo control and tracking; motor controller 86 for controlling the spin rate of medium 14 via a spindle motor 40, and an actuator assembly for reading the data from medium 14.

The actuator assembly comprises a read/write head 46 that is connected to a distal end of an actuator assembly. Read/write head 46 comprises a slider that carries a read/write element, either formed therein or attached thereto. The actuator assembly also comprises a suspension arm 44 and an actuator 49 that cooperate to move the slider 46 over the surface of medium 14 for reading and writing digital information. The read/write element of head 46 is electrically coupled to read channel 82 by way of electrical conductor 92.

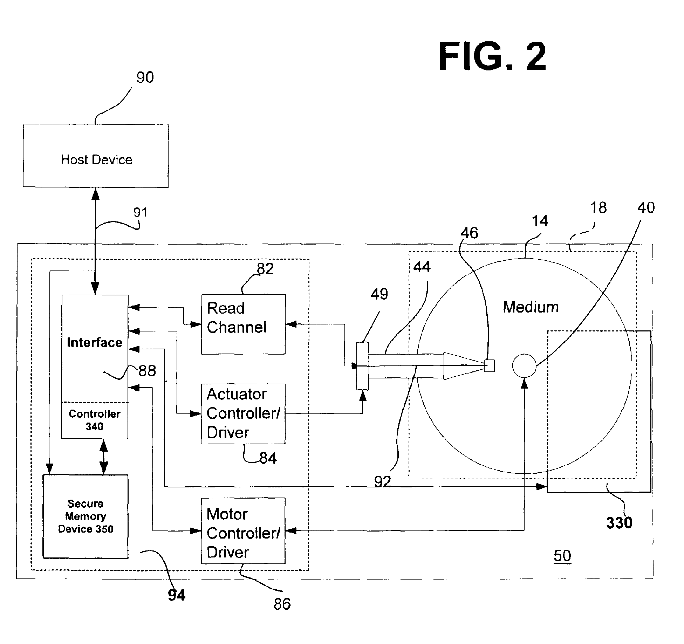

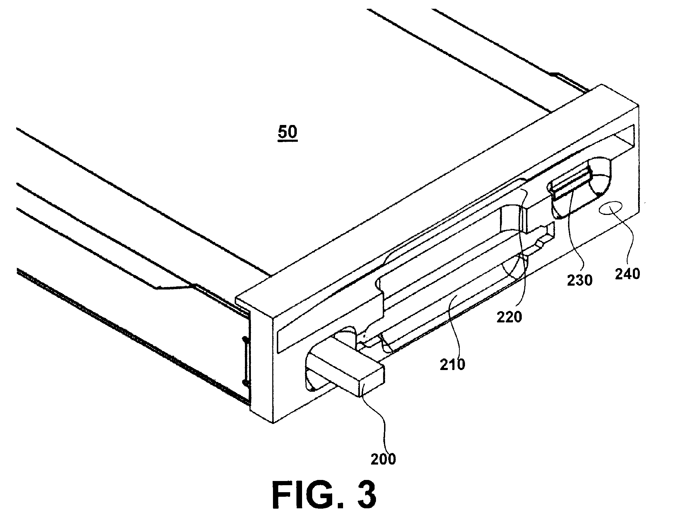

Data storage device 50 can comprise any of a variety of storage platforms, and data storage device 50 can be employed as a component in connection with the present invention. Figs. 2 and 3 illustrate a preferred embodiment of the present invention. Fig. 2 shows a block diagram of a data storage device 50 incorporating a user authentication device 330. Device firmware 94 comprises an interface/controller 88 which includes drivers for communicating with user authentication device 330. Additionally, a secure memory device 350 and a microprocessor/controller 340 for processing in connection with the secure memory device 350 are included. The secure memory device 350 can securely store data, such as cryptographic information relating to the data storage device 50, and has authentication capabilities.

More particularly, as shown in Fig. 3, a slot 220 is provided in data storage device 50 for receiving a removable data storage medium, and a button 230 is provided for ejecting the medium. Similarly, a slot 210 is provided for insertion and removal of an authentication component, such as one or more of a smart card, a magnetic carrier, an iris, a fingerprint, etc., which can communicate with user authentication device 330. A button 200 can be provided for ejection of the authentication component when ejection is appropriate, e.g., for ejection of a smart card. Furthermore, a visual indication 240, such as an LED, liquid crystal display, electronic ink display or other display, can be provided on the storage device 50 indicating a mode of operation of the data storage device 50, such as secure mode. Since it is desirable to retain the ability to operate the removable data storage device 50 according to its original operation, in a preferred embodiment, the device 50 can operate in two modes: a secure mode according to the present invention, and a mode without the security of the present invention.

In the embodiment of Figs. 2 and 3, user authentication device 330 is incorporated into the data storage device 50; however, this is but one implementation. For example, the user authentication device 330 could be located external to the data storage device 50 and provided as an independent unit, or incorporated into the host device or other system component. Additionally, as mentioned, alternative implementations for user authentication include a card with a magnetic strip, RF ID or other tagging, fingerprinting, iris-scanning, no authentication device or other authentication means known by those in the art.

As mentioned, the secure memory device 350 (with authentication) is used in connection with the electronics of the data storage device 50. The integrated circuit 350 can be ATMEL's® AT88SC153, but could be any device which secures data in a secure memory, protecting data from outside intervention. The specification for ATMEL® 's AT88SC153 is hereby incorporated by reference, and can be obtained from ATMEL® . Secure memory integrated circuit 350 communicates with interface 88 via an electrical interface, according to the specifications of the integrated circuit 350, and generally employs handshaking with a host 90 and/or other processor(s), such as microprocessor 340. In the preferred embodiment, the secure memory device 350 is designed to communicate with external processing means via passwords and predefined algorithms as a way of ensuring data access integrity.

### Distributed Security

In one aspect of the present invention, a distributed security scheme is provided. At the heart of security theory is that the more layers of security that can be provided, the more secure the environment. If one particular prong of a security scheme is 'cracked', other safeguards exist to thwart the efforts of one trying to break the security requirements. Put simply as an example, if one provides a safe and an alarm to guard goods, this is a more secure security solution than providing either the safe or alarm alone for the same purpose.

A simple algorithm could be used, e.g., that could tie the operating system of a computer to the encryption scheme used to encrypt files stored such that the operating system key would have to be present in order to decrypt the file. Since generally it may be desirable for a project to have a data storage medium accessible from multiple computers for multiple people involved in the project, the operating system key information could be managed by a network server; however, this 2-tiered encryption scheme is not the most desirable solution. If the network server failed due to errors or unanticipated conditions, it would hardly be practical for no data to be accessed during the shutdown period. Further, by their very nature, on-line network systems are vulnerable to security breaches, and consequently intrusions could be made in many cases, perhaps even without detection.

As a solution, cryptographic information and files can be prevented from leaving enterprise computers through a network with a firewall. A firewall is a system or group of systems that enforces an access control policy between two networks. The actual means by which this is accomplished varies widely, but in principle, the firewall can be thought of as a pair of mechanisms: one which exists to block traffic, and the other which exists to permit traffic. Some firewalls place a greater emphasis on blocking traffic, while others emphasize permitting traffic. Probably the most important thing to recognize about a firewall is that it implements an access control policy. Thus, a secure data network can be achieved with a firewall as an alternative to the problems discussed above relating to non-secure networks.

Since security solutions become significantly more secure when their compromise requires the consent, collusion or bringing together of multiple individuals or pieces of hardware, the present invention provides a distributed encryption scheme in which different components of a computer system can have both enterprise-common and component-unique encryption data associated therewith, out of which a single encryption key file is generated. In this fashion, each file that is transferred to a removable data storage medium has a unique key file associated therewith, and in order for data to be retrieved from the medium, a system having components with a predefined similarity to the original system components are present.

### Exemplary Embodiments

The present invention thus relates to a distributed cryptographic system in which a data file is to be encrypted. The system includes a plurality of pre-configured computer systems, each computer system including at least a first component and a second component. Components, e.g., can include a host, a data storage device, a user authentication device, a user, a client application, a data storage medium, and the like. The respective components of each computer system are substantially similar i.e., the first components are substantially similar, the second components are substantially similar, etc.

First components include first information that is associated with a predetermined file event, such as a file save or file read, and the first information is unique to each first component of each computer system, i.e., the first information is different for each first component. First components also include second information that is assigned commonly to each computer system.

Second components include third information that is associated with the predetermined file event, and the third information is unique to each second component of each computer system i.e., the third information is different for each second component. Second components also include fourth information that is assigned commonly to each computer system.

The system includes a processor for generating a first encryption key from at least one of the first and third informations and from at least one of the second and fourth informations. The processor is also for encrypting the data file.

A key file is also generated from at least the first and third informations which is encrypted and stored in connection with the encrypted data file. The key file can be further encrypted in a data storage device, having a microprocessor and a secure memory device with a stored key common to the data storage devices of the plurality of computer systems, further securing data from use by computers external to the plurality of computer systems.

For example, in the case of a system having a user, a host, software and device drivers, a remote data storage device and a removable storage medium, each component can have cryptographic information associated therewith such that the combination of some or all of the information forms the key file for an encrypted file stored on the removable storage medium. Once stored, the medium can be locked up in a safe, for instance, for additional security measure. Then, after retrieved from the safe, or more generally when a user attempts to access or read the data on the medium, there is some predefined similarity between the cryptographic data from the computer system (including user data) used to write the key file and the cryptographic data associated with the computer system (including user data) being used to read the data. This need not be the same exact cryptographic data conditions, but can be defined by security personnel according to the level of security to be assigned for the particular data. In some instances, it will be desirable that the data be accessible from multiple computers, storage devices and users, in which case several people can access the data on several enterprise computers. In other instances, perhaps only one computer and one person will be used for access to extremely sensitive information.

In accordance with the present invention, this is achieved by distributing cryptographic information and by making some cryptographic information unique to a data transfer event, and other cryptographic information common to the enterprise or a subset of the enterprise. Furthermore, the implementation of a secure memory device 350 further prevents cryptographic data associated with the storage device 50 from being discovered.

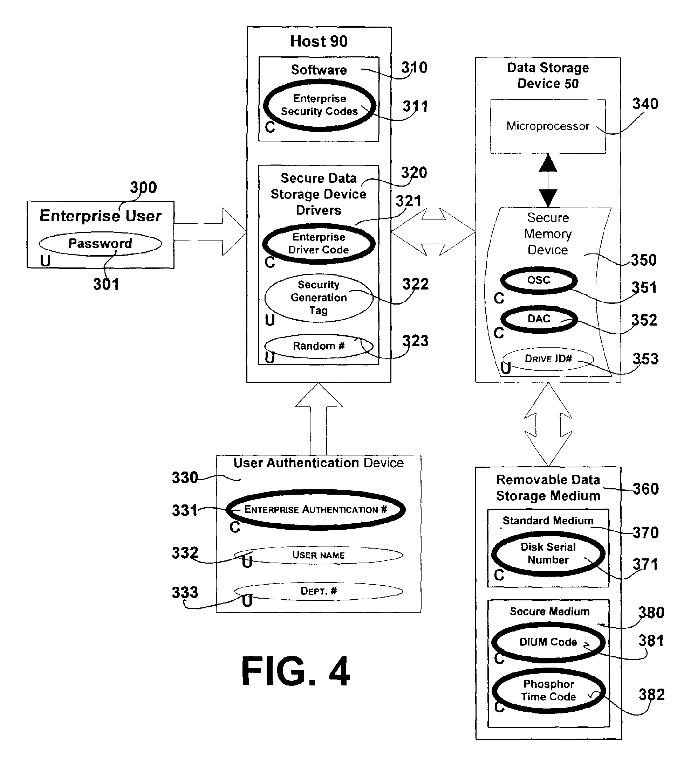

Fig. 4 is a block diagram demonstrating an implementation of the present invention in a computer system by distributing cryptographic information for cryptographically securing data transferred to a storage medium. Enterprise user 300, host 90, user authentication device 330, removable data storage device 50 and removable data storage medium 360, e.g., each represent a different component of the overall computer system, and also form the basis for the distribution of cryptographic information. A 'user', as herein referenced, can be the actual operator(s) of a computer system, who may e.g., have a password or other identification information associated therewith, or a 'user' can also refer to the data or information associated with the operator(s). Thus, it is not necessary to include an operator as part of a computer system. The data associated with the user can be included in the present invention as a component. Each component can have sub-components, and each component or sub-component can have cryptographic information that is unique to the particular component or sub-component for a file transfer, or can have cryptographic information that is common to the enterprise and will be for all file transfers of a particular security generation. In the diagram, information that is unique to the component is designated by a thin, non-bold oval and by the letter U, and information that is common to the enterprise is designated by a thick, bold oval and by the letter C.

As reflected by Fig. 4, the enterprise user 300 can enter a password into the computer for access to the computer. A user authentication device 330, which as described previously could also be incorporated into the removable data storage device 50, can be provided in communication with host 90. The host 90 comprises software 310, and secure data storage device drivers 320 and host 90 communicates with removable data storage device 50, having a secure memory device 350 and a microprocessor 340 for communicating with and processing information with respect to the secure memory device 350. Removable data storage medium 360 has a standard medium sub-component 370 and possibly a secure medium sub-component 380, depending upon the data storage device platform in connection with the present invention is employed.

As mentioned, for a given file transfer, each component/sub-component can have unique and/or common cryptographic information associated therewith. The password 301 associated with user 300 can be used as cryptographic information associated with system component 300 (the user) to be incorporated into the distributed security system. The password 301 is treated as unique because, subsequently, a different user may perform the same file transfer, but the password 301 may be different.

Host 90 has software 310 which enables the security system to be initialized or changed, inter alia. Software 310 has an enterprise security code (ESC) 311 associated therewith, which can be used as cryptographic information associated with system sub-component 310 (the software) to be incorporated into the distributed security system. Unless changed, ESC 311 remains common to the enterprise for all file transfers.

Host 90 also has data storage device drivers 320 which interface between host 90 and data storage device 50. Drivers 320 have an enterprise driver code (EDC) 321 associated therewith, which can be used as cryptographic information associated with system sub-component 320 (the drivers) to be incorporated into the distributed security system. Unless changed, EDC 321 remains common to the enterprise for all file transfers.

Drivers 320 also have a security generation tag 322 and a random number 323 associated therewith, which can be used as cryptographic information associated with system sub-component 320 (the drivers) to be incorporated into the distributed security system. Security generation tag 322 and random number 323 are not common to the enterprise for file transfers. Security generation tag 322 is included with drivers 320, and denotes a generation of security. Any time a security officer changes an aspect of the security system, e.g., in response to a suspected breach of security, the security generation tag 322 reflects the change. The security officer could additionally periodically change security tag 322. For example, security generation tag 322 is initially "1" and upon each new security generation, the security generation tag 322 is increased by "1" to "2", "3", "4", etc. Since from file transfer to file transfer, the security generation tag 322 can change, this information is denoted as unique to the enterprise. Random number 323 is generated for every file transfer and accordingly is inherently considered unique to the file transfer.

If the computer system supports a user authentication device 330, then device 330 may have an enterprise authentication number (EAN) 331 associated therewith, which can be used as cryptographic information associated with system component 330 (the user authentication device) to be incorporated in the distributed security system. Unless changed, EAN 331 remains common to the enterprise for all file transfers.

Also, user authentication device 330 can have unique cryptographic information associated therewith. For example, the user authentication device 330 might have a user name 332 and/or department number 333. This cryptographic information is considered unique to a file transfer event since subsequently the user who accesses the file or transfers the file to a storage medium may be different. Once again, depending upon the choice of user authentication device 330, different combinations or permutations of enterprise common and/or enterprise unique cryptographic information may be utilized, and similarly, methods of initializing the device 330 for use in connection with the present invention will vary according to choice of device.

The present embodiment also includes a secure memory device 350, in which cryptographic information may be stored. The secure memory device 350 preferably has associated therewith an organizational security code (OSC) 351 and a device access code (DAC) 352, which constitute cryptographic information associated with system sub-component 350 (the secure memory device) to be incorporated into the distributed security system. OSC 351 is preferably used as an encryption key for encrypting a key file in the present invention. Unless changed, OSC 351 is cryptographic information that is common to the enterprise for all file transfers. Unless changed, DAC 352 is also cryptographic information that is common to the enterprise for all file transfers.

The secure memory device 350 also preferably has associated therewith a drive identification number (DIN) 353 that is considered unique for a file transfer. DIN 353 is cryptographic information that changes from physical device to device. Thus, DIN 353 is denoted enterprise unique information since the device can be different for different file transfers.

The storage medium 360 may also have cryptographic information associated therewith in accordance with the present invention. In the case of a storage device 50 that receives "standard" mediums, without additional security measures, a disk serial number 371 is preferably associated with medium 360 as part of a standard medium 370 sub-component. In more secure storage media systems, the medium is customized to work only with device 50, by the provision of RF ID tagging, phosphor time codes, retro-reflective portions, etc. Cryptographic information may be associated with these additional security measures. In these circumstances, the present invention preferably associates with a medium 360, as a secure medium sub-component 370, e.g., a disk indelible utility mark (DIUM) code 381 and/or a phosphor time code 382. Since the medium 360 embodies the file to be cryptographically secured, the medium is also present when the medium 360 is subsequently accessed for decrypting the file. Consequently, the cryptographic information associated with medium 360, whether having a secure sub-component 370 or not, is information that is common to the enterprise for events relating to a particular file, and consequently, copies of the storage contents of the medium will be insufficient for reading the data thereon.

For background information regarding DIUM codes, "Disk Indelible Utility Mark", U.S. Appln. No. 091,453, filed 07/01/98, to Thomas, "Readable Indelible Mark on Storage Media", U.S. Appln. No.149,678, filed 09/09/98, to Thomas and "Readable Indelible Mark on Storage Media", U.S. Appln. No. 149,670, filed 09/09/98, to Thomas et al. each describe novel aspects of a DIUM code for use in connection with storage media.

Thus, an embodiment has been described wherein computer system components and sub-components are assigned cryptographic information, that is either unique or common. It can be appreciated by one of ordinary skill in the art that the present invention applies to all such data processing and storage systems in which cryptographic information can be assigned to system components and sub-components in this manner. Thus, the present invention is not intended to be limited by the particular embodiment shown in Fig. 4.

### Initialization

Exemplary initialization of the distributed cryptographic information could occur as follows: Host 90 has software 310 for initializing the security system of the present invention and for otherwise interfacing between the host operating system (and/or user) and the storage device drivers 320. Once the software 310 and drivers 320 are installed, software 310 contains programming which enables a person, e.g., a security officer of an enterprise, to modify the security system setup. For initially accessing the setup conditions of the security system, an initial enterprise security code (ESC) 311 is entered to execute the modification trellis of software 310. Then, a new ESC 311 can be entered, for subsequent entries into the modification trellis of software 310. ESC 311 can comprise multiple pieces of information and can be distributed among a plurality of security personnel so that no one person has the code for accessing the security system. ESC 311 is thus initialized.

Next, to further initialize or change the security system, the appropriate person, such as a security officer, enters or changes the enterprise common cryptographic information associated with the components of the computer system. The security officer would enter or change the EDC 321, enter or change the EAN 331 (if the user authentication device supports the association of an EAN 331), and configure the data storage device 50 by entering or changing the OSC 351 and the DAC 352. Once the data storage device 50 is initialized by the security officer, the security officer can initialize more data storage devices and distribute them to the enterprise computers with software 310 and drivers 320. Alternatively, a security system initialization disk can be created by the modification trellis of software 310. This disk can be used to initialize the rest of the enterprise computers, whereby all of the enterprise computers can be conformed to the initialization parameters set by the security officer.

Further, software 310 enables a security officer to prepare a universal mode disk, which can be given to personnel who are to be exempt from the requirements of the distributed encryption technique of the present invention. The universal mode disk enables an enterprise computer to bypass or disarm the requirements of the secure mode. As indicated previously, an LED could be placed on data storage device 50 to indicate a mode of the device 50, such as secure or universal mode.

Thus far, it has been described how to distribute cryptographic information among different components and sub-components of a data storage system, and it has been described how to initialize such a system by using the modification trellis of software 310, inter alia. In using the above-described system, a security officer can also use the software 310 to make one or more of the components/sub-components part of the crypotographic key file for decrypting an encrypted file. Thus, there is freedom for the security officer to define which components, users, and enterprise computers will be within the scope of the enterprise data security requirements.

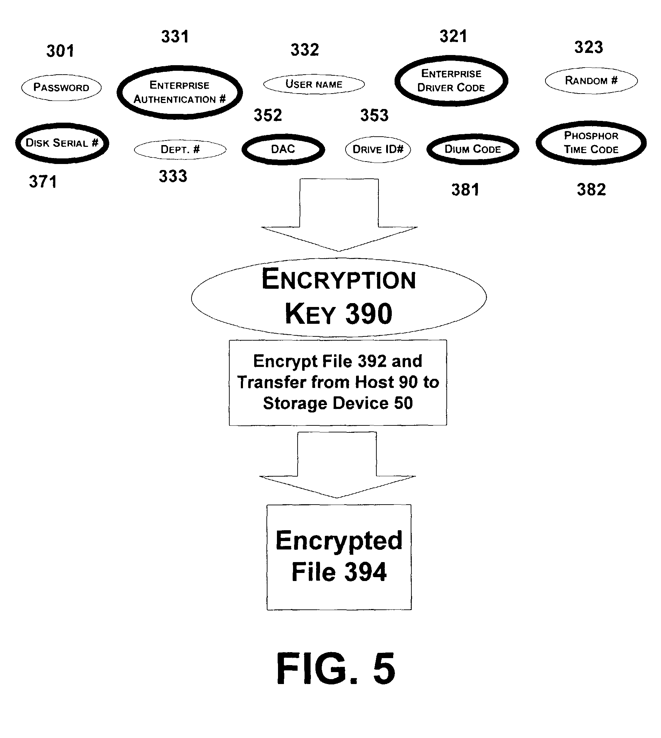

Fig. 5 shows how cryptographic information may be employed to encrypt files securely in accordance with the present invention. One or more of password 301, EAN 331, user name 332, EDC 321, random number 323, disk serial number 371, department number 333, DAC 352 DIN 353, DIUM code 381 and phosphor time code 382, for example, are combined by one of a variety of pre-determined algorithms for combining information to form an encryption key 390 for encrypting a confidential file 392. Preferably, encryption key 390 is of the symmetric type so that the confidential file 392 is encrypted and decrypted with encryption key 390. The encrypted confidential file 394 is written from host 90 to medium 360 of storage device 50. Encryption of the confidential file 392 with encryption key 90 can take place in the host 90 before file transfer to device 50, but encryption can also be accomplished by the processors and/or firmware of storage device 50. In this manner, an encryption key 390 is created from the components of the system and is used to encrypt a file 392.

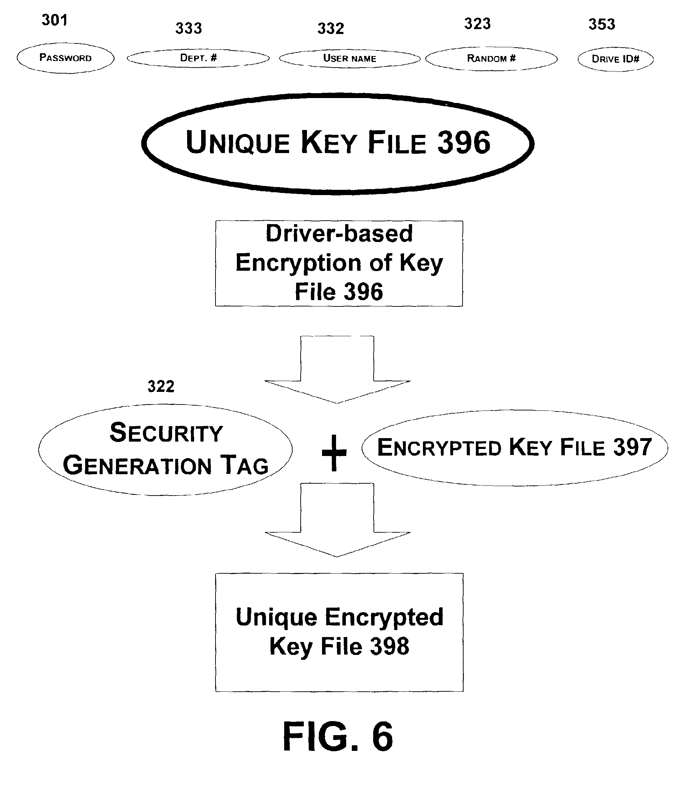

Since every enterprise computer initialized according to the present invention will have the cryptographic information that is enterprise common, information concerning the cryptographic information that was unique to the file transfer is also stored with the encrypted file 394. Thus, a key file 396 is created. Key file 396 is created using all of the subset of unique enterprise codes used to encrypt the file. In the present example, any one of a variety of pre-determined combining algorithms can be used to combine one or more of password 301, department number 333, user name 332, random number 323 and DIN 353. As shown in Fig. 6, the unique key file 396 is created by combining one or more of these unique codes. In the present embodiment, key file 396 is encrypted in host 90 to form an encrypted key file 397 before being added or combined with security generation tag (SGT) 322. The resulting file 398 is representative of the unique codes relating to the file transfer as well as the security generation associated with the transfer.

As indicated previously, the SGT 322 relates to the security generation for the security system. SGT 322 can be easily changed when there is a suspected breach in security, and files stored under previous generations can be automatically updated to the new generation e.g., by using software 310 or another updating technique. Or alternatively, some backwards compatibility to previous generations can be specified. In any event, the SGT 322 increases the flexibility of the present security system. Further, by changing the security generation tag 322, the security administrator avoids the need to reconfigure the secure memory devices 350 in the data storage devices 50 of the enterprise computers.

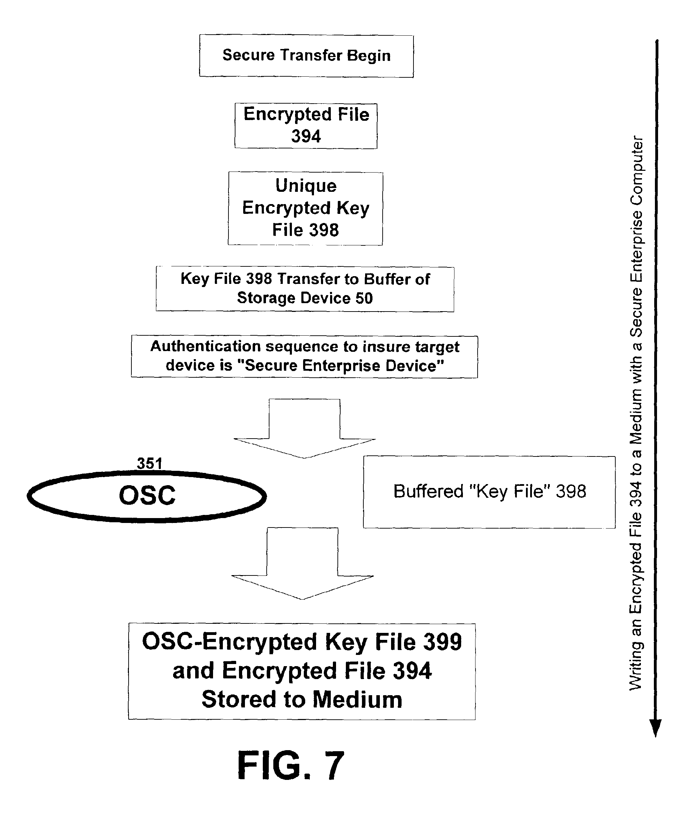

Fig. 7 shows a flow diagram relating to the process of writing an encrypted file 394 and the encrypted key file 398 to a storage medium in accordance with the present invention. Initially, a request is made by the user to save a file, including images, word processing documents, files previously encrypted by the user with an autonomous encryption software package, or other confidential data to a storage medium, and a secure transfer commences. The file is encrypted with encryption key 390 to form encrypted file 394 in the host 90, e.g., as described with respect to Fig. 5. A unique encrypted key file 398 is also created in host 90, e.g., as described with respect to Fig. 6. Then, key file 398 is transferred to a buffer memory (not shown) in the storage device 50. This buffer could be separate from the memory of the secure memory device 350. An authentication sequence is initiated according to the secure memory device 350 of the storage device 50 to confirm that the data storage device is indeed an enterprise storage device 50.

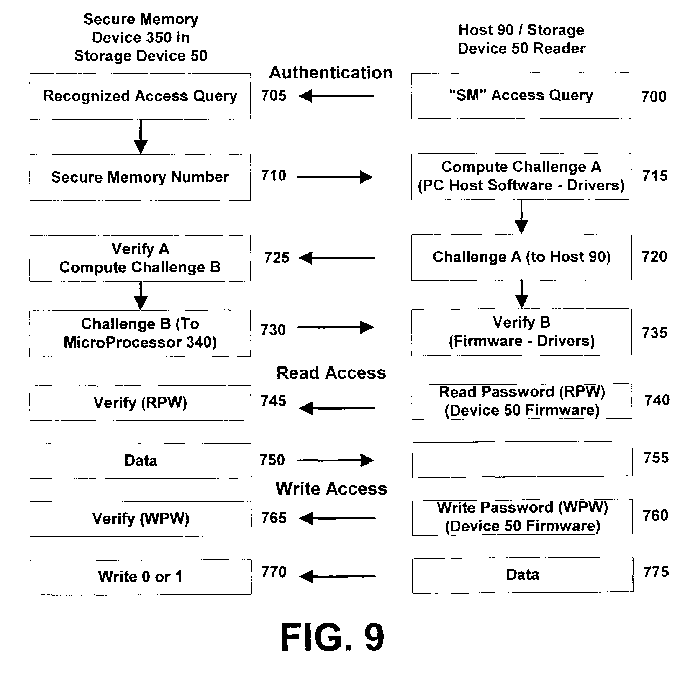

The authentication sequence of the secure memory device 350 is depicted in the block diagram of Fig. 9. Steps 700 through 735 show an authentication sequence in accordance with the present invention. Once authentication is ensured, steps 740 through 755 show a read access electrical exchange for accessing the secure memory of secure memory device 350 and steps 760 through 775 show a write access electrical exchange for writing to the secure memory of secure memory device 350. In accordance with Fig. 9, a secure memory access query for an authentication sequence comprises two challenges. Challenges generally are specialized handshaking algorithms for confirming between two devices that the other is authentic. One challenge is made by the host 90 and another is made by the secure memory device 350 to the electronics of the storage device 50. This configuration is generally driven by the specification of the ATMEL chip 350, and is not intended to be limiting, since any number of authentication protocols could be implemented in accordance with the present invention.

Once authentication has been completed, in accordance with the present invention, an additional layer of storage device encryption occurs. OSC 351, stored in and retrieved from the memory of secure memory device 350, is used as the symmetric encryption key for the buffered key file 398, thereby encrypting key file 398 to produce an OSC-encrypted key file 399. In this format, the OSC-encrypted key file 399 is stored to the medium, along with the encrypted file 394.

In this state, all of the cryptographic information needed to read the file with another enterprise computer is contained on the disk, since encryption key 390 used to encrypt the file 394 can be reconstructed by decrypting the OSC-encrypted unique key file 399 to gather the unique code elements and by combining the unique codes with the enterprise common codes found in the components of the enterprise computer.

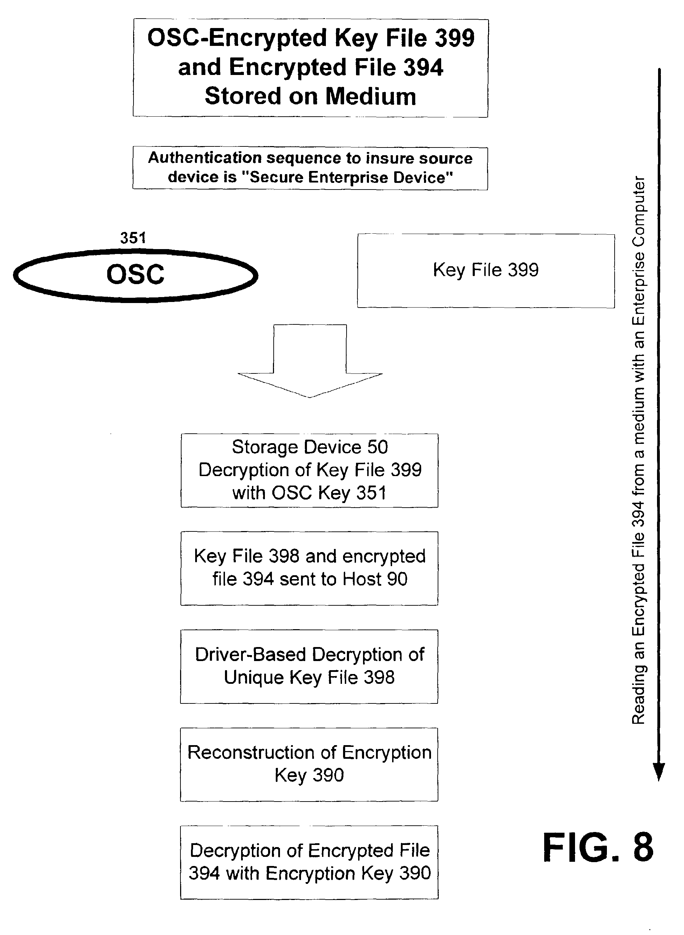

Fig. 8 shows a flow diagram relating to the process of reading an encrypted file 394 from a storage medium in accordance with the present invention. Initially, there is an OSC-encrypted key file 399 and an encrypted file 394 stored on a medium, as created by a distributed encryption process, such as the process described with respect to Figs. 4 through 7. First, a user would make a read access request to the storage device 50. In the present embodiment, this triggers an authentication sequence (See e.g., Fig. 9) to begin in connection with the secure memory device 350 of the storage device 50, so that once again, it can be confirmed that the storage device 50 is part of an enterprise computer. Assured that a secure enterprise computer is being used, key file 399 is decrypted with the OSC 351 key stored in the secure memory device 350, leaving the key file 398 originally encrypted by the host 90, which may or may not be the host of the present enterprise computer being used to read the file 394. Key file 398 thus results from OSC-decryption of key file 399. This key file 398 and the encrypted file 394 are then sent to the host 90 of the current enterprise computer for decryption. The drivers and/or other software contained on the host device decrypt the unique key file 398, by extracting the SGT 322 from the file, and otherwise reverse processing or inverting the algorithms used to create the key file 398. This makes the unique codes used in encrypting file 394 available to the host 90.

By compiling the enterprise common codes from the rest of the components of the enterprise computer, such as the disk serial number 371, the DIUM code 381, the phosphor time code 382, the EAN 331, DAC 352 and EDC 321, for example, all of the cryptographic information used to create the encrypted file is available to the host 90. With all of the codes used to encrypt the file 394, the same combining algorithm can be employed to re-create encryption key 390. Encryption key 390 is then used to decrypt encrypted file 394, and the original file can be seamlessly accessed by the user.

Thus, in accordance with the present invention, a security system is provided that maintains data transportability within an enterprise, maintains data removability of highly classified data from enterprise computers such that it may be physically secured in a safe, or other secure location, minimizes the threat posed by the insider by providing a robustly secure environment for confidential data, allows for user authentication, enables seamless user access to the security system, maintains compatibility with a variety of data encryption solutions, and diversifies the encryption scheme among enterprise common codes and system component specific codes. The present invention thus provides a flexible enterprise-specific portable storage solution for any enterprise that develops proprietary and/or confidential information.

It can be appreciated by one of ordinary skill in the art that Figures 4 through 9 represent a preferred embodiment of the distributed cryptographic security technique of the present invention, and that depending upon the data storage system, any number of additional components could be added or removed from the system, and that cryptographic information could be distributed among any additional components.

While the present invention has been described in connection with the preferred embodiments of the various figures, it is to be understood that other similar embodiments may be used or modifications and additions may be made to the described embodiment for performing the same function of the present invention without deviating therefrom. For example, although in a preferred embodiment, a particular computer system is described in the disclosed preferred embodiment, the present invention may be implemented in connection with any computing system in which there is a concern over the security of portable storage solutions. Furthermore, while symmetric encryption algorithms have been described in connection with examples, the present invention is adaptable to any encryption algorithm. Therefore, the present invention should not be limited to any single embodiment, but rather construed in breadth and scope in accordance with the recitation of the appended claims.

## Claims

1. A distributed cryptographic method for encrypting a file and enabling said encrypted file to be accessed from a plurality of pre-configured computer systems, each computer system including at least a first component and a second component, said first components being substantially similar and said second components being substantially similar, comprising:
assigning first information to each first component of each computer system, said first information for association with a predetermined file event and being unique to each first component of each computer system;
assigning second information to each first component, said second information being assigned to each computer system;
assigning third information to each second component of each computer system, said third information for association with the predetermined file event and being unique to each second component of each computer system;
assigning fourth information to each second component, said fourth information being assigned to each computer system;
receiving a request for said predetermined file event;
generating a first encryption key from at least one of said first and third informations and from at least one of said second and fourth informations; and
encrypting said file with said first encryption key in conjunction with the performance of said predetermined file event.

2. A method according to claim 1, further comprising:
generating with a predetermined algorithm a unique key file from at least said first and third informations; and
associating said unique key file with said encrypted file.

3. A method according to claim 1, wherein said encrypted file can be accessed only from one of said plurality of computer systems having stored therein said second and fourth informations.

4. A method according to claim 1, further comprising storing a second encryption key in a secure memory device incorporated into a data storage device and performing encryption algorithms with said second encryption key in said data storage device.

5. A method according to claim 4, wherein the second encryption key information remains in the data storage device and is used to encrypt at least a portion of a file associated with the first encryption key.

6. A method according to claim 1, further comprising the act of storing the results of said encrypting of the file to a storage medium.

7. A method according to claim 1, further comprising incorporating an authentication device in a data storage device.

8. A method according to claim 1, wherein the predetermined file event is one of a data storage event and data access event.

9. A computer readable medium having computer executable instructions for performing the acts recited in claim 1.

10. A computer readable medium having stored thereon a data structure for securing data for access from a plurality of preconfigured cumputer systems, comprising:
an encrypted file;
a unique key file, wherein the unique key file contains data associated with the first and third informations, as recited in claim 1.

11. A computer readable medium having stored thereon a data structure for securing data for access from a plurality of preconfigured cumputer systems, comprising:
an encrypted file;
a unique key file, wherein the unique key file contains data associated with matchless data of a computer system from which said encrypted file was transferred.

12. A distributed cryptographic system, comprising:
a data file to be encrypted;
a plurality of pre-configured computer systems, each computer system including at least a first component and a second component, said first components being substantially similar and said second components being substantially similar,
said first component including:
first information, said first information for association with a predetermined file event and being unique to each first component of each computer system, each first informat; and
second information, said second information being assigned to each computer system; and
said second component including:
third information, said third information for association with the predetermined file event and being unique to each second component of each computer system; and
fourth information to each second component, said fourth information being assigned to each computer system;
a processor for generating a first encryption key from at least one of said first and third informations and from at least one of said second and fourth informations and encrypting said data file.

13. A system according to claim 12, wherein said data file is encrypted and stored to a storage medium.

14. A system according to claim 13, further comprising:
a unique key file generated from at least said first and third informations with a predetermined algorithm, said unique key file being associated with the encrypted data file.

15. A system according to claim 12, wherein said file, once encrypted, can be accessed only from one of said plurality of computer systems having stored therein said second and fourth informations.

16. A system according to claim 12, wherein a data storage device is one of said first component and second component;

17. A system according to claim 16, wherein said data storage device has a secure memory device

18. A system according to claim 17, wherein the secure memory device has stored therein a second encryption key, such that an encryption algorithm is performed in the data storage device

19. A method according to claim 18, wherein the second encryption key information remains in the data storage device and is used to encrypt at least a portion of a file associated with the first encryption key.

20. A system according to claim 18, wherein a host of a computer system is one of said first component and second component.

21. A system according to claim 20, wherein an organizational identification number is one of said second and fourth informations.

22. A system according to claim 12, wherein an authentication device is one of said first component and second component.

23. A system according to claim 22, wherein said authentication device is a smart card.

24. A system according to claim 22, wherein said authentication device is incorporated in a data storage device.

25. A system according to claim 12, wherein a storage medium is one of said first component and second component.

26. A system according to claim 25, wherein a medium serial number is one of said second and fourth informations.

27. A system according to claim 12, wherein the predetermined file event is one of a data storage event and data access event.
